(19) Europäisches Patentamt

European Patent Office

Office européen des brevets

(11) **EP 1 400 097 B1**

(12) **FASCICULE DE BREVET EUROPEEN**

(45) Date de publication et mention
de la délivrance du brevet:
**06.12.2006 Bulletin 2006/49**

(51) Int Cl.:
***H04M 9/08*** *(2006.01)*

(21) Numéro de dépôt: **02738242.3**

(86) Numéro de dépôt international:
**PCT/FR2002/001616**

(22) Date de dépôt: **14.05.2002**

(87) Numéro de publication internationale:
**WO 2002/093895 (21.11.2002 Gazette 2002/47)**

(54) **PROCEDE DE CONTROLE ADAPTATIF DE SYSTEME D'ANNULATION D'ECHO MULTIVOIES ET DISPOSITIF POUR METTRE EN OEUVRE LE PROCEDE**

VERFAHREN UND VORRICHTUNG ZUR ADAPTIVEN STEUERUNG EINES DIGITALEN MEHRKANALECHOKOMPENSATORS

METHOD FOR ADAPTIVE CONTROL OF MULTICHANNEL ACOUSTIC ECHO CANCELLATION SYSTEM AND DEVICE THEREFOR

(84) Etats contractants désignés:
**DE ES GB IT**

(30) Priorité: **16.05.2001 FR 0106449**

(43) Date de publication de la demande:
**24.03.2004 Bulletin 2004/13**

(73) Titulaire: **FRANCE TELECOM**
**75015 Paris (FR)**

(72) Inventeurs:
• **LE TOURNEUR, Grégoire**
**F-22700 St Quay-Perros (FR)**
• **FEURTE, Delphine**
**F-77500 Chelles (FR)**

(74) Mandataire: **Poulin, Gérard**
**BREVALEX**
**3, rue du Docteur Lancereaux**
**75008 Paris (FR)**

(56) Documents cités:
**EP-A- 0 766 446          EP-A- 0 944 228**
**US-A- 5 323 459**

• **AMAND F ET AL: "MULTI-CHANNEL ACOUSTIC ECHO CANCELLATION" INTERNATIONAL WORKSHOP ON ACOUSTIC ECHO AND NOISE CONTROL, XX, XX, 1995, pages 57-60, XP000199437**

**Description**

**Domaine technique et art antérieur**

La présente invention concerne un procédé de contrôle adaptatif de système d'annulation d'écho multivoies ainsi qu'un dispositif pour mettre en oeuvre le procédé.

L'invention s'applique au fonctionnement en mains libres des outils de communication tels que, par exemple, les téléphones mobiles, les ordinateurs personnels (communément appelés PC, de l'anglaise « Personnal Computer »), et, plus généralement, tout type de dispositif présent dans les stations de travail audio et/ou vidéo où la communication audio s'effectue à l'aide de plusieurs haut-parleurs distants du ou des intervenants.

L'écho acoustique est un obstacle majeur au bon fonctionnement en mains libres des outils de communication. L'écho acoustique résulte du signal qui, émis par un haut-parleur, est capté, soit directement, soit par réflexion, par un microphone. Le problème de l'écho acoustique a fait l'objet de nombreuses études tant dans le cas monodimensionnel que dans le cas multidimmensionnel.

Dans le cas monodimensionnel il n'y a qu'un signal de prise de son et qu'un signal de restitution sonore, et cela même si le signal de prise de son est capté par plusieurs microphones et le signal de restitution sonore restitué par plusieurs haut-parleurs.

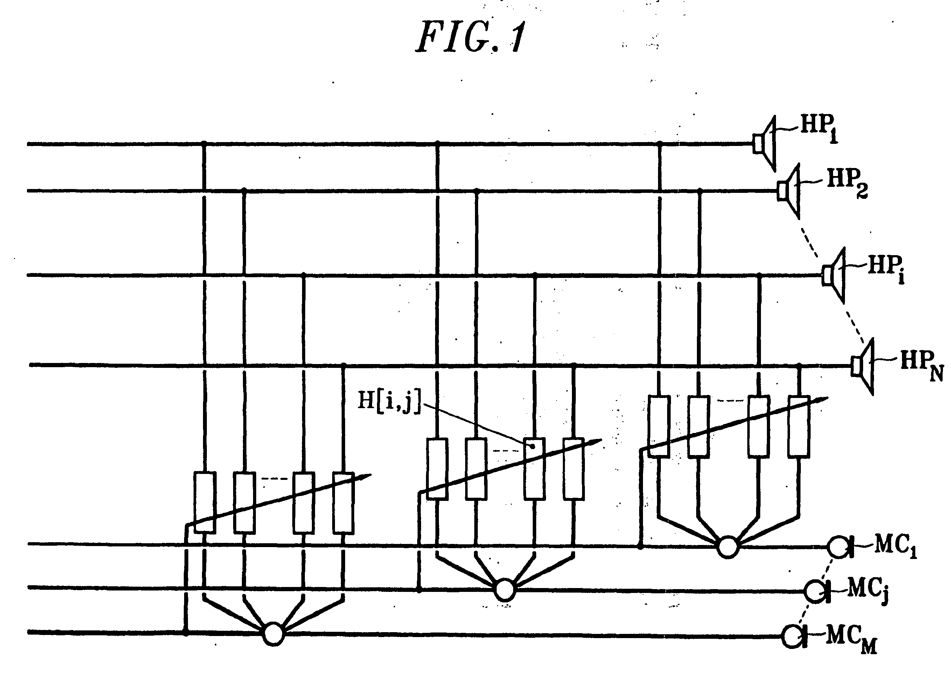

Dans le cas multidimensionnel, un système d'annulation d'écho comprend N voies de réception de signal comprenant, chacune, un haut-parleur $HP_i$ (i= 1, 2, ..., N) et M canaux de prise de son, chaque canal de prise de son comprenant un microphone $MC_j$ (j=1, 2, ..., M). Un tel système d'annulation d'écho est représenté en figure 1. Il comprend N x M chemins acoustiques et, partant, N x M dispositifs d'annulation d'écho H(i, j). Chaque dispositif d'annulation d'écho H(i, j) comprend un filtre d'identification qui estime le couplage acoustique entre le haut-parleur $HP_i$ et le microphone $MC_j$. Outre le problème du fonctionnement en temps réel d'un tel système, dû à la puissance de calcul requise, un autre problème se pose qui concerne la convergence de l'algorithme de contrôle des filtres d'identification.

Un dispositif d'annulation d'écho multiples est connu du document EP 944 228 A.

Le problème de la convergence de l'algorithme de contrôle des filtres d'identification a fait l'objet de nombreuses études. Parmi les méthodes de convergence, il est possible de mentionner, par exemple, la méthode basée sur l'adjonction d'un bruit aléatoire ou la méthode basée sur l'introduction d'une fonction non linéaire de façon à décorréler les signaux à traiter. Cette dernière méthode est décrite dans le brevet US 5,828,756 de Benesty et al. délivré aux Etats-Unis le 27 octobre 1998 sous le titre « *Stereophonic acoustic echo cancellation using non-linear transformations* ».

Les méthodes de convergence de l'art antérieur présentent de nombreux inconvénients, parmi lesquels il est possible de citer la durée importante des temps de calcul.

L'invention ne présente pas les inconvénients mentionnés ci-dessus.

**Exposé de l'invention**

En effet, l'invention concerne un procédé de contrôle adaptatif de système d'annulation d'écho multivoies comprenant N haut-parleurs $HP_i$ (i=1, 2, ..., N), N étant un entier supérieur ou égal à 2, et M microphones $MC_j$ (j=1, 2, ..., M), M étant un entier supérieur ou égal à 1, le système comprenant NxM filtres d'identification $F_{ij}$ à coefficients variables, le filtre d'identification $F_{ij}$ permettant d'estimer, sous l'action d'une information de contrôle, le couplage acoustique entre le haut-parleur $HP_i$ et le microphone $MC_j$, l'information de contrôle étant calculée à l'aide d'un algorithme d'adaptation sur la base d'un signal d'erreur entre un signal détecté par le microphone $MC_j$ et un signal de référence qui comprend le signal estimé issu du filtre d'identification $F_{ij}$, et d'un pas d'adaptation des coefficients variables. Le signal de référence comprend, en outre, un signal égal à la somme de P signaux estimés supplémentaires $\bar{y}_{k,j}\ k \neq i$ (k=1, 2, ..., i- 1, i+1,..., P+1) issus de P filtres d'identification $F_{kj(k \neq i)}$, P étant un entier compris entre 1 et N-1, et le pas d'adaptation des coefficients variables est fonction de la présence ou de l'absence de signal sur les P haut-parleurs $HP_k$ (k≠i).

L'invention concerne également un dispositif de contrôle adaptatif de système d'annulation d'écho multivoies comprenant N haut-parleurs $HP_i$ (i=1, 2, ..., N), N étant un entier supérieur ou égal à 2, et M microphones $MC_j$, M étant un entier supérieur ou égal à 1, le système comprenant un filtre d'identification $F_{ij}$ à coefficients variables pour estimer le couplage acoustique entre le haut-parleur $HP_i$ et le microphone $MC_j$, le filtre d'identification étant commandé par une information de contrôle issue d'une unité de mise à jour commandée par un signal d'erreur entre un signal détecté par le microphone et un signal de référence qui comprend le signal estimé issu du filtre d'identification $F_{ij}$, et par un pas d'adaptation des coefficients variables. Le dispositif comprend des moyens pour additionner au signal de référence les signaux estimés $\hat{y}_{k,j}$ $k \neq i$ (k=1, 2, ..., i-1, i+1,..., P+1), issus de P filtres d'identification $F_{kj(k \neq i)}$, P étant un entier pouvant être compris entre 1 et N-1, et des moyens pour modifier la valeur du pas d'adaptation des coefficients variables en fonction de la présence ou de l'absence de signal sur les P haut-parleurs $HP_k$ ($k \neq 1$).

Comme cela apparaîtra ultérieurement, selon le mode de réalisation préférentiel de l'invention, le nombre P est égal à N-1.

### Brève description des figures

D'autres caractéristiques et avantages de l'invention apparaîtront à la lecture d'un mode de réalisation préférentiel fait en référence aux figures jointes parmi lesquelles :

- le figure 1 représente un schéma de principe de système d'annulation d'écho multivoies;
- la figure 2 représente un dispositif de contrôle adaptatif de système d'annulation d'écho multivoies selon un premier mode de réalisation de l'invention ;
- la figure 3 représente un dispositif de contrôle adaptatif de système d'annulation d'écho multivoies selon un deuxième mode de réalisation de l'invention.

### Description détaillée de modes de mise en oeuvre de l'invention

La figure 1 a été décrite précédemment, il est donc inutile d'y revenir.

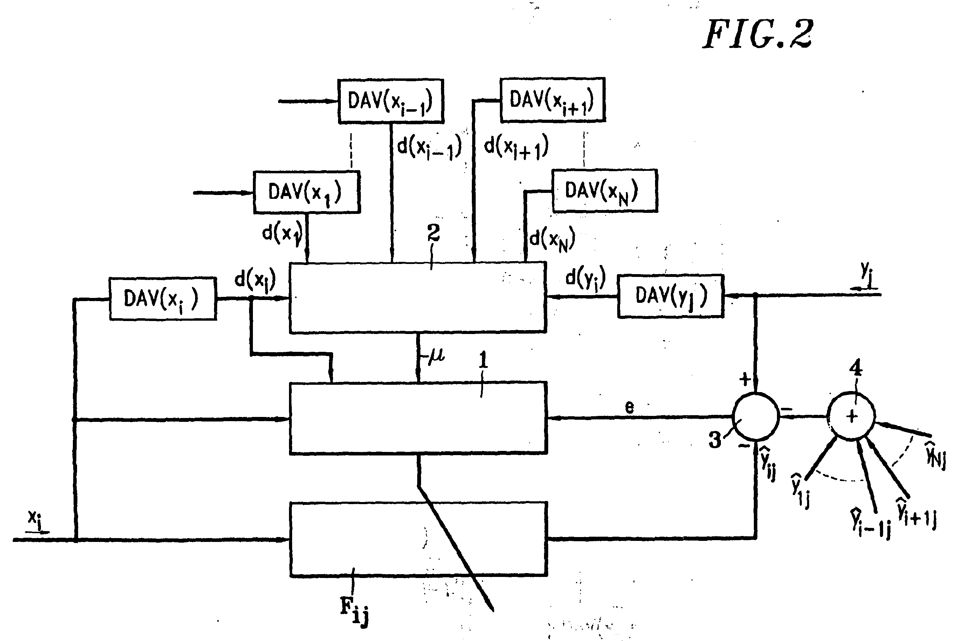

La figure 2 représente un dispositif de contrôle adaptatif de système d'annulation d'écho multivoies selon un premier mode de réalisation de l'invention.

Le dispositif de contrôle de la figure 2 est le dispositif de contrôle selon l'invention qui permet l'annulation d'écho entre le microphone $MC_j$ et le haut-parleur $HP_i$.

Le dispositif de contrôle comprend un filtre d'identification $F_{ij}$ à coefficients variables, une unité de mise à jour 1, un moyen de calcul 2 du pas $\mu$ d'adaptation des coefficients variables, N détecteurs d'activité vocale $DAV(x_i)$ (i=1, 2, ..., N), un détecteur d'activité vocale $DAV(y_j)$, un soustracteur 3 et un additionneur 4. Chaque détecteur d'activité vocale indique, en fonction d'un seuil de décision, la présence ou l'absence d'un signal vocal. Ainsi le signal, $d(x_i)$ qui est issu du détecteur d'activité vocale $DAV(x_i)$ indique-t-il la présence ou l'absence d'un signal dans le haut-parleur $HP_i$. De même, le signal $d(y_j)$ qui est issu du détecteur $DAV(y_j)$ indique la présence ou l'absence d'un signal dans le microphone $MC_j$.

Le filtre d'identification $F_{ij}$ est un filtre programmable à réponse impulsionnelle finie dont les coefficients doivent être adaptés. L'unité de mise à jour 1 adapte les coefficients du filtre sur la base du signal $x_i$ présent dans le haut-parleur $HP_i$, du pas calculé $\mu$ des coefficients variables et d'un signal d'erreur e. L'unité de mise à jour 1 met en oeuvre, par exemple, l'algorithme du gradient stochastique normalisé (NLMS) ou encore l'algorithme de projection affine d'ordre 2 (APA2).

L'unité de mise à jour 1 procède à la mise à jour du filtre $F_{ij}$ lorsque les conditions ci-dessous sont réalisées :

- une activité vocale est détectée par le détecteur $DAV(x_i)$,
- aucune activité vocale n'est détectée par le détecteur $DAV(y_j)$,
- aucune activité vocale n'est détectée par les détecteurs $DAV(x_{k,k \neq i})$.

Selon le premier mode de réalisation de l'invention, la valeur du pas $\mu$ est égale à zéro si l'un quelconque des signaux $d(x_k)$, $k \neq i$, indique la présence d'un signal sur un haut-parleur $HP_k$. Dans le cas où aucun signal n'est détecté, le pas d'adaptation $\mu$ est choisi comme l'optimum considéré pour l'algorithme d'adaptation mis en oeuvre par l'unité de mise à jour. Le coefficient $\mu$ est alors, par exemple, égal à 0,33 pour l'algorithme NLMS ou l'algorithme APA2.

Le signal d'erreur e est égal à la différence entre le signal $y_j$ présent dans le microphone $MC_j$ et un signal de référence. Le signal de référence est constitué du signal estimé $\hat{y}_{i,j}$ issu du filtre d'identification $F_{ij}$ et de l'ensemble des signaux estimés $\hat{y}_{k,j}$ $k \neq i$ issus des N-1 filtres d'identification $F_{k,j}$. A cette fin, les signaux $\hat{y}_{k,j}$ $k \neq i$ issus des N-1 filtres d'identification $F_{k,j}$ sont sommés par l'additionneur 4.

Le signal d'erreur s'écrit :

3

$$e = y_j - \left( \hat{y}_{i,j} + \sum_k \bar{y}_{k,j \; k \neq i} \right).$$

Le dispositif selon l'invention permet avantageusement de réduire le temps de calcul de l'étape de mise à jour puisque la fixation du pas $\mu$ à la valeur zéro en présence de signal sur l'un quelconque des haut-parleurs arrête le calcul de convergence.

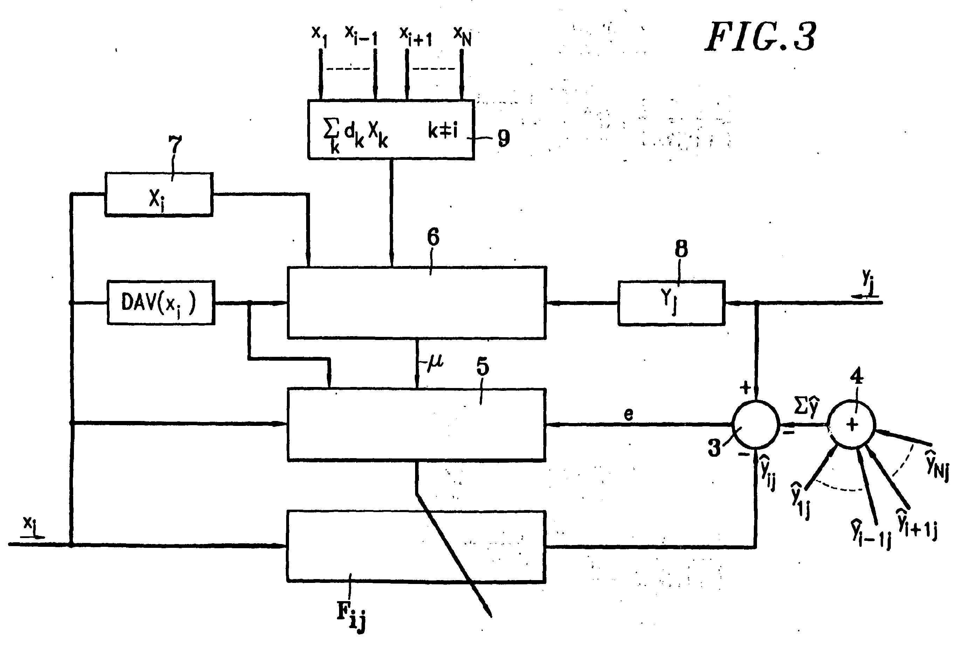

La figure 3 représente un dispositif de contrôle adaptatif de système d'annulation d'écho multivoies selon un deuxième mode de réalisation de l'invention.

Selon le deuxième mode de réalisation de l'invention, le pas $\mu$ d'adaptation des coefficients est calculé selon le principe décrit dans la demande de brevet français intitulée *"Procédé et dispositif d'identification adaptative et annuleur d'écho adaptatif incluant un tel dispositif",* déposée en France le 13 septembre 1995 et publiée sous le n°2 738 695. Le dispositif de contrôle comprend un filtre d'identification $F_{ij}$ à coefficients variables, une unité de mise à jour 5, un moyen de calcul 6 du pas $\mu$ d'adaptation des coefficients variables, un détecteur d'activité vocale sur le haut-parleur $HP_i$, $DAV(x_i)$, un estimateur 7 de l'énergie $X_i$ du signal $x_i$, un estimateur 8 de l'énergie $Y_j$ du signal $y_j$, un estimateur 9 de l'énergie pondérée $\sum_k d_k X_{k, k \neq i}$ des signaux $x_k$ ($k \neq i$) issus des N-1 haut-parleurs $HP_k$ (k=1, 2, ..., i-1, i+1, ..., N), un soustracteur 3 et un additionneur 4.

L'unité de mise à jour 5 procède à la mise à jour du filtre $F_{ij}$ lorsqu'une activité vocale est détectée par le détecteur $DAV(xi)$.

Le pas $\mu$ d'adaptation des coefficients variables est alors calculé par l'expression :

$$\mu = \frac{a_i X_i}{b_i X_i + c_j Y_j + \sum_k \left( d_k X_{k, k \neq i} \right)}$$

où $a_i$, $b_i$, $c_j$ et $d_k$ ($k \neq i$) sont des coefficients positifs. A titre d'exemple non limitatif, le coefficient $a_i$ peut être égal à 1, le coefficient $b_i$ peut être égal à 3, le coefficient $c_j$ peut être compris entre 10 et 100 (il dépend des conditions de l'environnement acoustique), et les coefficients $d_k$ peuvent être sensiblement du même ordre de grandeur que le coefficient $c_j$.

Les coefficients $d_k$ permettent avantageusement de régler le contrôle du pas en fonction dû nombre de voies haut-parleur. Si une activité vocale est présente sur au moins l'une des voies haut-parleur, le coefficient $\mu$ tend vers zéro et l'adaptation se trouve arrêtée.

Un avantage particulier de ce deuxième mode de réalisation de l'invention est de faire que le coefficient $\mu$ tende continûment vers zéro au fur et à mesure que l'énergie des signaux augmente. L'utilisation de détecteurs d'activité vocale ne présente pas cet avantage puisque l'adaptation peut avoir lieu avec des signaux parasites tant que le seuil de décision n'est pas atteint. Selon le deuxième mode de réalisation de l'invention, il est particulièrement simple d'éviter toute désadaptation du filtre.

Quel que soit son mode de réalisation, l'invention s'applique avantageusement à tout type d'algorithme adaptatif.

**Revendications**

1. Procédé de contrôle adaptatif de système d'annulation d'échos multivoies comprenant N haut-parleurs $HP_i$ (i= 1, 2, ..., N), N étant un entier supérieur ou égal à 2, et M microphones $MC_j$ (j=1, 2, ..., M), M étant un entier supérieur ou égal à 1, le système comprenant NxM filtres d'identification $F_{ij}$ à coefficients variables, le filtre d'identification $F_{ij}$ permettant d'estimer, sous l'action d'une information de contrôle, le couplage acoustique entre le haut-parleur $HP_i$ et le microphone $MC_j$, l'information de contrôle étant calculée à l'aide d'un algorithme d'adaptation sur la base d'un signal d'erreur (e) entre un signal détecté par le microphone $MC_j$ ($y_j$) et un signal de référence qui comprend le signal estimé $\left( \hat{y}_{ij} \right)$ issu du filtre d'identification $F_{ij}$, et d'un pas ($\mu$) d'adaptation des coefficients, **caractérisé en ce que** le signal de référence comprend, en outre, un signal égal à la somme de P signaux estimés supplémentaires $\left( \bar{y}_{k,j \; k \neq i} \quad (k=1, \; 2, \; ..., \; i-1, \; i+1, ..., \; P+1) \right)$ issus de P filtres d'identifi-

cation $F_{kj(k\neq i)}$, P étant un entier compris entre 1 et N-1, et **en ce que** le pas ($\mu$) d'adaptation des coefficients variables est fonction de la présence ou de l'absence de signal sur les P haut-parleurs $HP_k$.

2. Procédé selon la revendication 1, **caractérisé en ce que** le pas ($\mu$) d'adaptation des coefficients variables est égal à zéro si la présence d'un signal est détecté sur au moins un des P haut-parleurs $HP_k$.

3. Procédé selon la revendication 2, **caractérisé en ce que**, lorsque l'algorithme d'adaptation est l'algorithme du gradient stochastique normalisé (NLMS) ou l'algorithme de projection affine d'ordre 2 (APA2), le pas ($\mu$) d'adaptation des coefficients variables est égal à 0,33 si aucun signal n'est détecté sur les P haut-parleurs $HP_k$.

4. Procédé selon la revendication 1, **caractérisé en ce qu'**il comprend :

   - une étape pour estimer l'énergie $X_i$ du signal acoustique émis par le haut-parleur $HP_i$,
   - une étape pour estimer l'énergie $Y_j$ du signal reçu par le microphone $MC_j$,

   - une étape pour estimer l'énergie pondérée $\sum_k d_k X_{k,j}\ k\neq i$ des signaux émis par P haut-parleurs $HP_k$,

   P étant un entier compris entre 1 et N-1, et **en ce que** le pas $\mu$ d'adaptation des coefficients variables est déterminé par l'expression :

   $$\mu = \frac{a_i X_i}{b_i X_i + c_j Y_j + \sum_k \left(d_k X_{k,k\neq i}\right)},$$

   où $a_i$, $b_i$, $c_j$ et $d_k$ ($k\neq i$) sont des coefficients positifs.

5. Procédé selon la revendication 4, **caractérisé en ce que** :

   - $a_i = 1$,
   - $b_i = 3$,
   - $c_j$ est compris entre 10 et 100, et
   - $d_k$ est compris entre 10 et 100.

6. Dispositif de contrôle adaptatif de système d'annulation d'échos multivoies comprenant N haut-parleurs $HP_i$ (i=1, 2, ..., N), N étant un entier supérieur ou égal à 2, et M microphones $MC_j$ (j=1, 2, ..., M), M étant un entier supérieur ou égal à 1, le système comprenant un filtre d'identification $F_{ij}$ à coefficients variables pour estimer le couplage acoustique entre le haut-parleur $HP_i$ et le microphone $MC_j$, le filtre d'identification étant commandé par une information de contrôle issue d'un dispositif de mise à jour (1, 5) commandé par un signal d'erreur (e) entre un signal détecté par le microphone ($y_j$) et un signal de référence qui comprend le signal estimé ($\hat{y}_{ij}$) issu du filtre d'identification $F_{ij}$, et par un pas ($\mu$) d'adaptation des coefficients, **caractérisé en ce qu'**il comprend des moyens pour additionner au signal de référence les signaux estimés ($\hat{y}_{k,j}\ k\neq i$ (k=1, 2, ..., i-1, i+1, ..., P+1)) issus de P filtres d'identification $F_{kj(k\neq i)}$, P étant un entier pouvant être compris entre 1 et N-1, et des moyens pour modifier la valeur du pas ($\mu$) d'adaptation des coefficients en fonction de la présence ou de l'absence de signal sur P haut-parleurs $HP_k$.

7. Dispositif selon la revendication 6, **caractérisé en ce que** les moyens pour modifier la valeur du pas ($\mu$) comprennent P détecteurs d'activité vocale $DAV(x_k)$, le détecteur $DAV(x_k)$ permettant de détecter la présence ou l'absence d'un signal sur le haut-parleur $HP_k$.

8. Dispositif selon la revendication 6, **caractérisé en ce que** les moyens pour modifier la valeur du pas ($\mu$) comprennent des premiers moyens (7) pour estimer l'énergie $X_i$ du signal acoustique émis par le haut-parleur $HP_i$, des deuxièmes moyens (8) pour estimer l'énergie $Y_j$ du signal reçu par le-microphone $MC_j$, des troisièmes moyens (9) pour estimer l'énergie pondérée $\sum_{k} d_k X_{k,j}\ k \neq i$ des signaux émis par P haut-parleurs $HP_k$ ($k \neq i$), P étant un entier compris entre 1 et N-1 et des quatrièmes moyens pour déterminer le pas ($\mu$) d'adaptation des coefficients variables selon l'expression :

$$\mu = \frac{a_i X_i}{b_i X_i + c_j Y_j + \sum_{k} \left( d_k X_{k,k \neq i} \right)}.$$

où $a_i$, $b_i$, $c_j$ et $d_k$ ($k \neq i$) sont des coefficients positifs.

**9.** Dispositif selon la revendication 8, **caractérisé en ce que** :

- $a_i = 1$
- $b_i = 3$
- $c_j$ est compris entre 10 et 100, et,
- $d_k$ est compris entre 10 et 100.

**Claims**

**1.** Method for adaptive control of a multi-channel echo cancellation system comprising N loudspeakers $HP_i$ (i = 1, 2, ..., N), where N is an integer greater than or equal to 2, and M microphones $MC_j$ (j=1, 2, ..., M), where M is an integer greater than or equal to 1, the system comprising N×M identification filters $F_{ij}$ with variable coefficients, the identification filter $F_{ij}$ being used to estimate acoustic coupling between the loudspeaker $HP_i$ and the microphone $MC_j$ under the action of control information, the control information being calculated using an adaptive algorithm based on an error signal (e) between a signal detected by the microphone $MC_j$ ($y_j$) and a reference signal that includes the estimated signal $(\hat{y}_{ij})$ output from the identification filter $F_{ij}$, and a coefficients adaptation stepsize ($\mu$), **characterized in that** the reference signal also comprises a signal equal to the sum of P estimated supplementary signals $(\hat{y}_{k,j\ k \neq i}\ (k=1,\ 2,\ \ldots,\ i-1,\ i+1,\ \ldots,\ P+1))$ output from P identification filters $F_{kj\ (k \neq i)}$, where P is an integer between 1 and N-1, and **in that** the variable coefficients adaptation stepsize ($\mu$) depends on whether or not there is a signal present on the P loudspeakers $HP_k$.

**2.** Method according to Claim 1, **characterized in that** the variable coefficients adaptation stepsize ($\mu$) is equal to zero if a signal is detected on at least one of the P loudspeakers $HP_k$.

**3.** Method according to Claim 2, **characterized in that**, when the adaptive algorithm is the Normalized Least Mean Squares (NLMS) algorithm or the order 2 Affine Projection Algorithm (APA2), the variable coefficients adaptation stepsize ($\mu$) is equal to 0.33 if no signal is detected on the P loudspeakers $HP_k$.

**4.** Method according to Claim 1, **characterized in that** it comprises:

- a step to estimate the energy $X_i$ of the acoustic signal output by the loudspeaker $HP_i$,
- a step to estimate the energy $Y_j$ of the signal received by the microphone $MC_j$,

- a step to estimate the weighted energy $\sum_{k} d_k X_{k,j\ k \neq i}$ of signals output from P loudspeakers $HP_k$, where P is an integer between 1 and N-1, and **in that** the variable coefficients adaptation stepsize $\mu$ is determined by the following expression:

$$\mu = \frac{a_i X_i}{b_i X_i + C_j Y_j + \sum_{k}(d_k X_{k,k \neq i})}$$

where $a_i$, $b_i$, $c_j$ and $d_k$ ($k \neq i$) are positive coefficients.

5. Method according to Claim 4, **characterized in that**:

    - $a_i = 1$,
    - $b_i = 3$,
    - $c_j$ is between 10 and 100, and
    - $d_k$ is between 10 and 100.

6. Device for adaptive control of a multi-channel echo cancellation system comprising N loudspeakers $HP_i$ (i=1, 2, ..., N), where N is an integer greater than or equal to 2, and M microphones $MC_j$ (j=1, 2, ..., M), where M is an integer greater than or equal to 1, the system comprising a variable coefficients identification filter $F_{ij}$ being used to estimate acoustic coupling between the loudspeaker $HP_i$ and the microphone $MC_j$, the identification filter being controlled by control information output from an update device (1, 5) controlled by an error signal (e) between a signal detected by the microphone ($y_j$) and a reference signal that includes the estimated signal ($\hat{y}_{ij}$) output from the identification filter $F_{ij}$, and by a coefficients adaptation stepsize ($\mu$), **characterized in that** it comprises means of adding the estimated signals ($\hat{y}_{k,j\ k \neq i}$ (k=1, 2, ..., i-1, i+1, ..., P+1)) output from P identification filters $F_{kj(k \neq i)}$ to the reference signal, where P is an integer between 1 and N-1, and means of modifying the value of the coefficients adaptation stepsize ($\mu$) depending on whether or not there is a signal on P loudspeakers $HP_k$.

7. Device according to Claim 6, **characterized in that** the means of modifying the value of the stepsize ($\mu$) comprise P voice activity detectors $DAV(x_k)$, the detector $DAV(x_k)$ indicating whether or not there is a signal on the loudspeaker $HP_k$.

8. Device according to Claim 6, **characterized in that** the means of modifying the value of the stepsize ($\mu$) comprise first means (7) of estimating the energy $X_i$ of the acoustic signal output by the loudspeaker $HP_i$, second means (8) of estimating the energy $Y_j$ of the signal received by the microphone $MC_j$, third means (9) of estimating the weighted energy $\sum_{k} d_k X_{k,j\ k \neq i}$ of signals output from P loudspeakers $HP_k$ ($k \neq i$), where P is an integer between 1 and N-1, and fourth means of determining the variable coefficients adaptation stepsize ($\mu$) by the following expression:

$$\mu = \frac{a_i X_i}{b_i X_i + C_j Y_j + \sum_{k}(d_k X_{k,k \neq i})}$$

where $a_i$, $b_i$, $c_j$ and $d_k$ ($k \neq i$) are positive coefficients.

9. Device according to Claim 8, **characterized in that**:

    - $a_i = 1$,
    - $b_i = 3$,
    - $c_j$ is between 10 and 100, and
    - $d_k$ is between 10 and 100.

**Patentansprüche**

1. Verfahren zum adaptiven Steuern eines Systems zum Kompensieren von Mehrwegechos, das N Lautsprecher $HP_i$ (i = 1, 2, ..., N), wobei N eine ganze Zahl größer oder gleich 2 ist, und M Mikrophone $MC_j$ (j = 1, 2, ..., M), wobei M eine ganze Zahl größer oder gleich 1 ist, aufweist, wobei das System N × M Identifizierungsfilter $F_{ij}$ mit variablen Koeffizienten umfasst, wobei das Identifizierungsfilter $F_{ij}$ ermöglicht, unter der Wirkung einer Steuerinformation die akustische Kopplung zwischen dem Lautsprecher $HP_i$ und dem Mikrophon $MC_j$ zu schätzen, wobei die Steuerinformation mit Hilfe eines Adapationsalgorithmus auf der Grundlage eines Fehlersignals (e) zwischen einem von dem Mikrophon $MC_j$ erfassten Signal ($y_j$) und einem Referenzsignal, das das geschätzte Signal $(\hat{Y}_{ij})$ enthält, das von dem Identifizierungsfilter $F_{ij}$ ausgegeben wird, und mit Hilfe einer Adaptionsschrittweite ($\mu$) der Koeffizienten berechnet wird, **dadurch gekennzeichnet, dass** das Referenzsignal außerdem ein Signal enthält, das gleich der Summe der P zusätzlichen geschätzten Signale

   $(\hat{Y}_{k,j}\ k \neq i\ (k\ =\ 1,\ 2,\ ...,\ i\ -\ 1,\ i\ +\ 1,\ ...,\ P\ +\ 1))$, die von P Identifizierungsfiltern $F_{kj(k \neq 1)}$ ausgegeben werden, wobei P eine ganze Zahl im Bereich von 1 bis N - 1 ist, und dass die Adaptionsschrittweite ($\mu$) der variablen Koeffizienten von der Anwesenheit oder der Abwesenheit eines Signals in den P Lautsprechern $HP_k$ abhängt.

2. Verfahren nach Anspruch 1, **dadurch gekennzeichnet, dass** die Adaptionsschrittweite ($\mu$) der variablen Koeffizienten gleich null ist, falls die Anwesenheit eines Signals bei wenigstens einem der P Lautsprecher $HP_k$ erfasst wird.

3. Verfahren nach Anspruch 2, **dadurch gekennzeichnet, dass** dann, wenn der Adaptionsalgorithmus ein Algorithmus des normierten stochastischen Gradienten (NLMS) oder der Algorithmus der affinen Projektion der Größenordnung 2 (APA2) ist, die Adaptionsschrittweite ($\mu$) der variablen Koeffizienten gleich 0,33 ist, falls bei den P Lautsprechern $HP_k$ kein Signal erfasst wird.

4. Verfahren nach Anspruch 1, **dadurch gekennzeichnet, dass** es umfasst:

   - einen Schritt zum Schätzen der Energie $X_i$ des Schallsignals, das von dem Lautsprecher $HP_i$ ausgesendet wird,
   - einen Schritt zum Schätzen der Energie Yj des von dem Mikrophon $MC_j$ empfangenen Signals,

   - einen Schritt zum Schätzen der gewichteten Energie $\sum\limits_{k} d_k X_{k,j}\ k \neq i$ der Signale, die von P Lautsprechern $HP_k$ ausgesendet werden, wobei P eine ganze Zahl im Bereich von 1 bis N - 1 ist, und dass die Adaptionsschrittweite $\mu$ der variablen Koeffizienten durch den folgenden Ausdruck bestimmt ist:

   $$\mu = \frac{a_i X_i}{b_i X_i + c_j Y_j + \sum\limits_{k}(d_k X_{k,k \neq i})}$$

   wobei $a_i$, $b_i$, $c_j$ und $d_k$ (k $\neq$ i) positive Koeffizienten sind.

5. Verfahren nach Anspruch 4, **dadurch gekennzeichnet, dass**:

   - $a_i$ = 1,
   - $b_i$ = 3,
   - $c_j$ im Bereich von 10 bis 100 liegt und
   - $d_k$ im Bereich von 10 bis 100 liegt.

6. Vorrichtung zum adaptiven Steuern eines Systems zum Beseitigen von Mehrwegechos, die N Lautsprecher $HP_i$ (i = 1, 2, ..., N), wobei N eine ganze Zahl größer oder gleich 2 ist, und M Mikrophone MCj (j = 1, 2, ..., M), wobei M eine ganze Zahl größer oder gleich 1 ist, aufweist, wobei das System ein Identifizierungsfilter $F_{ij}$ mit variablen Koeffizienten aufweist, um die akustische Kopplung zwischen dem Lautsprecher $HP_i$ und dem Mikrophon $MC_j$ zu

schätzen, wobei das Identifizierungsfilter durch eine Steuerinformation gesteuert wird, die von einer Aktualisierungsvorrichtung (1, 5) ausgegeben wird, die durch ein Fehlersignal (e) zwischen einem von dem Mikrophon ($y_j$) erfassten Signal und einem Referenzsignal, das das geschätzte Signal $(\hat{Y}_{ij})$ enthält, das von dem Identifizierungsfilter $F_{ij}$ ausgegeben wird, und durch eine Adaptionsschrittweite ($\mu$) der Koeffizienten gesteuert wird, **dadurch gekennzeichnet, dass** sie Mittel, um zu dem Referenzsignal die geschätzten Signale

$$(\hat{Y}_{k,j\ k\neq i}\ \ (k\ =\ 1,\ \ 2,\ \ ...,\ \ i\ -\ 1,\ \ i\ +\ 1,\ \ ...,\ P\ +\ 1)),$$ die von P Identifizierungsfiltern $F_{kj(k+i)}$ ausgegeben werden, wobei P eine ganze Zahl ist, die im Bereich von 1 bis N - 1 liegen kann, zu addieren, und Mittel, um den Wert der Adaptionsschrittweite ($\mu$) der Koeffizienten in Abhängigkeit von der Anwesenheit oder der Abwesenheit des Signals bei P Lautsprechern $HP_k$ zu modifizieren, aufweist.

7. Vorrichtung nach Anspruch 6, **dadurch gekennzeichnet, dass** die Mittel zum Modifizieren des Wertes der Schrittweite ($\mu$) P Stimmaktivitätsdetektoren $DAV(x_k)$ aufweist, wobei der Detektor $DAV(x_k)$ ermöglicht, die Anwesenheit oder die Abwesenheit eines Signals bei dem Lautsprecher $HP_k$ zu erfassen.

8. Vorrichtung nach Anspruch 6, **dadurch gekennzeichnet, dass** die Mittel zum Modifizieren des Wertes der Schrittweite ($\mu$) erste Mittel (7) zum Schätzen der Energie $X_i$ des Schallsignals, das von dem Lautsprecher $HP_i$ ausgesendet wird, zweite Mittel (8) zum Schätzen der Energie $Y_j$ des von dem Mikrophon $MC_j$ empfangenen Signals, dritte Mittel (9) zum Schätzen der gewichteten Energie $\sum_k d_k X_{k,j}\ k\neq i$ der Signale, die von P Lautsprechern $HP_{k(k\neq i)}$ ausgesendet werden, wobei P eine ganze Zahl im Bereich von 1 bis N - 1 ist, und vierte Mittel zum Bestimmen der Adaptiorisschrittweite ($\mu$) der variablen Koeffizienten gemäß dem Ausdruck

$$\mu\ =\ \frac{a_i X_i}{b_i X_i\ +\ c_j Y_j\ +\ \sum_k d_k X_{k,k\neq i}},$$

wobei $a_i$, $b_i$, $c_j$ und $d_k$ ($k\neq i$) positive Koeffizienten sind, umfassen.

9. Vorrichtung nach Anspruch 8, **dadurch gekennzeichnet, dass**:

- $a_i$ = 1,
- = 3,
- $c_j$ im Bereich von 10 bis 100 liegt und
- $d_k$ im Bereich von 10 bis 100 liegt.

FIG.1

EP 1 400 097 B1

*FIG.2*

FIG.3